# EUROPEAN PATENT APPLICATION

(11) **EP 1 967 871 A2**
(43) Date of publication of application: **10.09.2008**
(21) Application number: 08250788.0
(22) Date of filing: 07.03.2008
(51) Int. Cl.: G02B 5/20, H01J 17/49

(54) **Filter and display apparatus including the same**

(30) Priority: 08.03.2007 KR 20070023174
(71) Applicant: Samsung SDI Co., Ltd., Suwon-si, Gyeonggi-do (KR)
(72) Inventor: Moon, Dong-Gun, Suwon-si, Gyeonggi-do (KR); Bae, Jae-Woo, Suwon-si, Gyeonggi-do (KR); Cha, Jun-Kyu, Suwon-si, Gyeonggi-do (KR); Hur, Sang-Yeol, Suwon-si, Gyeonggi-do (KR); Jeong, Hee-Seong, Suwon-si, Gyeonggi-do (KR)
(74) Representative: Mounteney, Simon James

(57) **Abstract**

A filter which reduces brightness impairment, improves bright room contrast, and is relatively lightweight, and a display apparatus including the same. The filter can be easily manufactured at low cost. The filter includes a base film; and a plurality of first color patterns extending in a predetermined direction and disposed at predetermined intervals in a stripe form on a surface of the base film. The filter may further include a plurality of second color patterns extending in a predetermined direction and disposed at predetermined intervals in a stripe form on an opposite surface of the base film to the surface on which the first color patterns are disposed.

## Description

### BACKGROUND OF THE INVENTION

### 1. Field of the Invention

The present invention relates to a filter and a plasma display apparatus including the same, and more particularly, to a filter which provides excellent bright room contrast by transmitting internal light and blocking external light, and can be produced in lightweight thin films at low cost and a plasma display apparatus including the same

### 2. Description of the Related Art

A plasma display apparatus using a plasma display panel is a flat display device which displays images using a gas discharge principle, and has excellent display capability in terms of brightness, contrast, after image, and viewing angle, compared to a conventional cathode-ray tube (CRT). In addition, plasma display apparatuses can be made in thin films with large sizes. Due to these advantages, plasma display apparatuses are regarded as a next-generation large-size flat display apparatus.

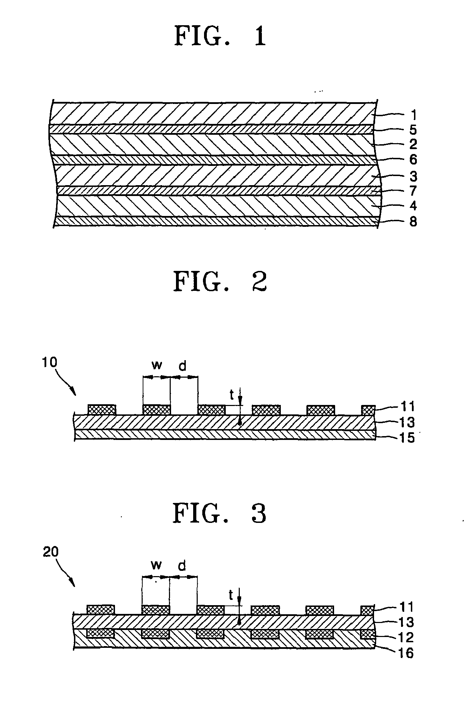

FIG. 1 is a cross-sectional view of part of a conventional tempered glass filter of a plasma display apparatus.

As illustrated in FIG. 1, the conventional tempered glass filter includes an anti-reflective layer 1, a heat-treated tempered glass 2, an etching mesh film 3, and a near infrared-absorbing film 4, and adhesive layers 5, 6, 7, and 8 interposed between respective layers.

However, in the conventional plasma display apparatus, an image is reflected twice due to a difference in the materials constituting a front substrate of a plasma display panel and a tempered glass filter. In addition, the tempered glass filter has a thickness of about 3 mm so that it can endure external impacts, and thus, the weight of the filter is increased and its manufacturing cost increases. Furthermore, the conventional tempered glass filter has a very complex structure formed of many functional films, and thus the manufacturing process is complex and expensive. In addition, the conventional tempered glass filter cannot sufficiently improve a bright room contrast, and even when the bright room contrast can be improved, brightness is significantly reduced. Accordingly, there is a need to solve these problems.

### SUMMARY OF THE INVENTION

The present invention sets out to provide a filter which reduces the decrease in brightness, improves bright room contrast, and is more lightweight, and a display apparatus including the same.

The present invention also sets out to provide a filter which can be easily manufactured at low cost, and a display apparatus including the same.

According to an aspect of the present invention, there is provided a filter including: a base film; and a plurality of first color patterns extending in a predetermined direction and disposed at predetermined intervals in a stripe form on a surface of the base film.

A width of a cross section of each of the first color patterns may be substantially identical to or smaller than an interval between adjacent first color patterns.

The width of the cross section of each of the first color patterns may be in the range of 5 µm to 50 µm.

The thickness of the cross section of each of the first color patterns may be in the range of 1 µm to 200 µm.

Based on the cross section of each of the first color patterns, a ratio of the thickness to the interval between adjacent first color patterns may be in the range of 0.025 to 50.

The filter may further include an adhesive layer disposed on a rear surface of the base film.

The filter may further includes a plurality of second color patterns extending in a predetermined direction and disposed at predetermined intervals in a stripe form on an opposite surface of the base film to the surface on which the first color patterns are disposed.

The second color patterns may be disposed in substantially corresponding locations to the first color patterns.

The misalignment of the first color pattern and the second color patterns may be in the range of 0% to 20 %, wherein 0% of the misalignment indicates exact overlapping of the first color pattern and the second color pattern.

Widths of the first and second color patterns are substantially the same as intervals of the first and second color patterns on the base film.

The width of a cross section of each of the first and second color patterns may be in the range of 5 µm to 60 µm.

The thickness of a cross section of each of the first and second color patterns may be in the range of 1 µm to 200 µm.

Based on the cross section of each of the first and second color patterns, a ratio of the thickness to the width may be in the range of 0.025 to 60.

The filter may further include an adhesive layer which fills intervals between a rear surface of the base film and the second color patterns.

The base film includes dyes or pigment to adjust color and transmissivity.

According to another aspect of the present invention, there is provided a display apparatus including: a display panel which displays an image; an operation circuit substrate which controls the display panel by supplying an operation signal and electrical power to the display panel; a chassis supporting the display panel and the operation circuit substrate; and the filter bonding to a front surface of the display panel.

The display apparatus may be a plasma display panel which displays images through gas discharge.

A first aspect of the invention provides a filter as set out in Claim 1. Preferred features of this aspect of the invention are set out in Claims 2 to 15. A second aspect of the invention provides a display apparatus as set out in Claim 16. Preferred features of this aspect of the invention are set out in Claim 17.

### BRIEF DESCRIPTION OF THE DRAWINGS

The above and other features and advantages of the present invention will become more apparent upon making reference to the following description of embodiments thereof together with the attached drawings in which:

FIG. 1 is a cross-sectional view of part of a conventional filter;

FIG. 2 is a schematic cross-sectional view of part of a filter according to an embodiment of the present invention;

FIG. 3 is a schematic cross-sectional view of part of a filter according to another embodiment of the present invention;

FIG. 4 is an exploded perspective view of a display apparatus including the filter according to an embodiment of the present invention; and

FIG. 5 is a cross-sectional view of the display apparatus of FIG. 4, taken along line V-V.

### DETAILED DESCRIPTION OF THE INVENTION

The present invention will now be described more fully with reference to the accompanying drawings, in which embodiments of the invention are shown.

FIG. 2 is a schematic cross-sectional view of part of a filter 10 according to an embodiment of the present invention.

As illustrated in FIG. 2, the filter 10 includes a plurality of color patterns 11 and a base film 13.

The color patterns 11 are disposed at predetermined intervals in a stripe form on the base film 13. The color patterns 11 are formed of a material that has a high absorption rate with respect to visible light. The color patterns 11 may be black. The color patterns 11 are substantially disposed at constant intervals in order to obtain a uniform external light reflection decrease effect in the entire screen. *w* denotes the width of a cross section of the color patterns 11, *d* denotes the interval between adjacent color patterns 11, and *w* ≤ *d* ≤ 95*w*.

When the width of the color patterns 11 is substantially identical to the interval between adjacent color patterns, the aperture rate is 50%. When the aperture rate is less than 50%, the transmissivity rate of the filter is lowered and thus the brightness of the display device is decreased. Even when the distance (d) of the color patterns 11 is greater than the width (w) of the cross section of the color patterns 11, the distance (d) of the color patterns 11 may be 95 times or less greater than the width (w) of the cross section of the color patterns 11 so that the aperture rate is 95% or less. When the aperture rate is more than 95%, the external light reflection decrease effect of the filter is substantially decreased and the bright room contrast improvement effect is substantially decreased.

A cross section of each color pattern 11 may have a width (w) of 5 µm to 50 µm and a thickness (t) of 1 µm to 200 µm. The width (w) may be 0.025 to 50 times larger than the thickness (t).

When the thickness (t) of the color patterns 11 is more than 200 µm, a display device to which the filter according to an embodiment of the present invention is applied may have a very narrow viewing angle. On the other hand, when the thickness (t) of the color patterns 11 is less than 1 µm, the bright room contrast improvement effect of the filter may be substantially decreased.

The base film 13 is formed of a material through which visible light can propagate. The base film 13 bonds the filter 10 directly to a front surface of a display apparatus. The base film 13 can be formed of any transparent material that is easily, tightly attached to glass or plastic in view of interface characteristics. In addition, the base film 13 can be formed of a flexible material for easy transportation and to simplify an attaching process and make transportation easy. However, when the base film 13 is bonded to the front surface of the display apparatus by an adhesive layer 15 as illustrated in the drawing, the interface characteristics of the base film forming material may be less relevant.

The base film 13 may be formed of polyethersulphone (PES), polyacrylate (PAR), polyetherimide (PEI), polyethyelenen napthalate (PEN), polyethyeleneterepthalate (PET), polyphenylene sulfide (PPS), polyallylate, polyimide, polycarbonate (PC), cellulose tri acetate (TAC), cellulose acetate propinonate (CAP), or the like.

The base film 13 can be colored with a predetermined color. Accordingly, the transmissivity of visible light with respect to the filter 10 can be adjusted by controlling coloring conditions of the base film 13. For example, when the base film 13 has a dark color, the transmissivity of visible light may decrease. In addition, the color of visible light which propagates in the forward direction from a display apparatus can be controlled. That is, the base film 13 can be colored such that a user is visibly satisfied, or colored to improve color purity of a display apparatus including the filter 10. Furthermore, the base film 13 has color patterns corresponding to respective sub pixels of a plasma display panel to which the filter 10 is applied. It will be appreciated that the base film 13 may be colored in various ways for a variety of color correction purposes.

The base film 13 have a thickness of 50µm to 500µm, preferably 80µm to 400µm. When the base film 13 is thin, the effects of preventing scattering of pieces when the panel is destroyed may be decreased. On the other hand, when the base film 13 is thick, the efficiency of the laminating process may be decreased.

As described above, an adhesive layer 15 can be disposed on a rear surface of the base film 13 in order to bind the filter 10 to a front surface of the display apparatus.

Since the adhesive layer 15 directly contacts a display panel, the difference in the refraction rates of the adhesive layer 15 and the display panel may be adjusted to a predetermined value, such as 1.0% or less, to decrease a double image phenomenon.

The adhesive layer 15 may include a thermoplastic or UV thermosetting resin. For example, the adhesive layer 15 may include an acryl resin, pressure sensitive adhesive (PSA). The adhesive layer 15 can be formed by dip coating, air knife coating, roller coating, wire bar coating, or gravure coating.

The adhesive layer 15 may further include a compound that absorbs near infrared light, such as a copper atom-containing resin, a copper compound or phosphor compound-containing resin, a copper compound or THIO derivative-containing resin, a tungsten-based compound-containing resin, or a cyanine-based compound-containing resin.

The adhesive layer 15 may further include a coloring agent, such as a dye or pigment, to block neon light for color correction. The coloring agent selectively absorbs light of the visible light region having a wavelength of 400 - 700 nm. In particular, when the plasma display panel is discharged, a neon gas acting as a discharge gas generates unnecessary visible light with a wavelength of about 585 nm. As a result, a cyanine-based, squarylium-based, azomethine-based, xanthene-based, oxonol-based, or azo-based compound is used to absorb the unnecessary visible light. These coloring agents are included in the adhesive layer 15 in a dispersed micro particle form.

FIG. 3 is a schematic cross-sectional view of part of a filter 20 according to another embodiment of the present invention.

As illustrated in FIG. 3, the filter 20 includes a plurality of first color patterns 11, a plurality of second color patterns 12, and a base film 13.

The first color patterns 11 are disposed at predetermined intervals in a strip form on a surface of the base film 13. The second color patterns 12 are disposed at predetermined intervals in a strip form on another surface of the base film 13, that is, on an opposite surface of base film 13 to the surface on which the first color patterns 12 are disposed. The first color patterns 11 and the second color patterns 12 are formed of a material that has a high absorption rate with respect to visible light. For example, the first color patterns 11 and the second color patterns 12 may be black. The first color patterns 11 and the second color patterns 12 may be substantially disposed at constant intervals in order to obtain a uniform external light reflection decrease effect in the entire screen. *w* denotes widths of the first color patterns 11 and the second color patterns 12, *d* denotes the interval between adjacent first color patterns 11 and the interval between adjacent second color patterns 12, and *w* ≤ *d* ≤ 95*w*.

When the widths of the first color patterns 11 and the second color patterns 12 are substantially identical to the intervals between adjacent first color patterns 11 and adjacent second color patterns, the aperture rate is 50%. When the aperture rate is less than 50%, the transmissivity rate of the filter is lowered and thus the brightness of the display device is decreased. Even when distances (d) of the first color patterns 11 and the second color patterns 12 are greater than widths (w) of the first color patterns 11 and the second color patterns 12, the distances (d) of the first color patterns 11 and the second color patterns 12 may be 95 times or less greater than the widths (w) of the first color patterns 11 and the second color patterns 12 so that the aperture rate is 95% or less. When the aperture rate is more than 95%, the external light reflection decrease effect of the filter is substantially decreased and the bright room contrast improvement effect is substantially decreased:

The first color patterns 11 may be disposed in substantially corresponding locations to the second color patterns 12 wherein the first color patterns 11 and the second color patterns 12 are disposed on opposite surfaces of the base film 13. The misalignment of the first color pattern and the second color patterns may be 20 % or less of widths of cross sections of the first color patterns 11 and the second color patterns 12. When the misalignment is 20% or more, the aperture rate is low and the external light reflection decrease effect is decreased.

A cross section of each of the first color patterns 11 and the second color patterns 12 may have a width (w) of 5 µm to 60 µm and a thickness (t) of 1 to 200 µm. The width (w) may be 0.025 to 60 times larger than the thickness (t).

When the thickness (t) of each of the first color patterns 11 and the second color patterns 12 is more than 200 µm, a display device to which the filter according to an embodiment of the present invention is applied may have a very narrow viewing angle. On the other hand, when the thickness (t) of each of the first color patterns 11 and the second color patterns 12 is less than 1µm, the bright room contrast improvement effect of the filter may be substantially decreased.

The base film 13 may be formed of a material through which visible light propagates, and directly binds the filter 20 to a front surface of the display apparatus, as described in the previous embodiment. In addition, when an adhesive layer is used as described above, there is no need to consider the adhesive properties of the base film 13 with respect to the front surface of the display apparatus. At this time, the intervals between the second color patterns and the intervals between the outer surface of the adhesive layer 16 and the surfaces of the second color patterns 12 may be entirely filled, and other features are the same as described in the previous embodiment.

Table 1 shows measurement results according to a comparative embodiment and the current embodiment of the present invention. In Table 1, the unit of brightness is cd/m². In a filter used to obtain the measurement results, the line width of a color pattern is 80µm, the thickness of a film is 175µm, the interval between color patterns is 80µm and the aperture rate is 50%.

**Table 1**

| | Transmissivity | Peak Brightness | External Light Reflection Brightness | Contrast Ratio |
|---|---|---|---|---|
| Comparative Embodiment | 39% | 546 | 1.772 | 308:1 |
| Current Embodiment | 39% | 546 | 1.370 | 398:1 |

Referring to Table 1, the filter according to the current embodiment of the present invention and the filter according to a comparative embodiment have the same transmissivity. However, the filter according to the current embodiment of the present invention shows lower external light reflection brightness and thus the bright room contrast can be improved by about 23%.

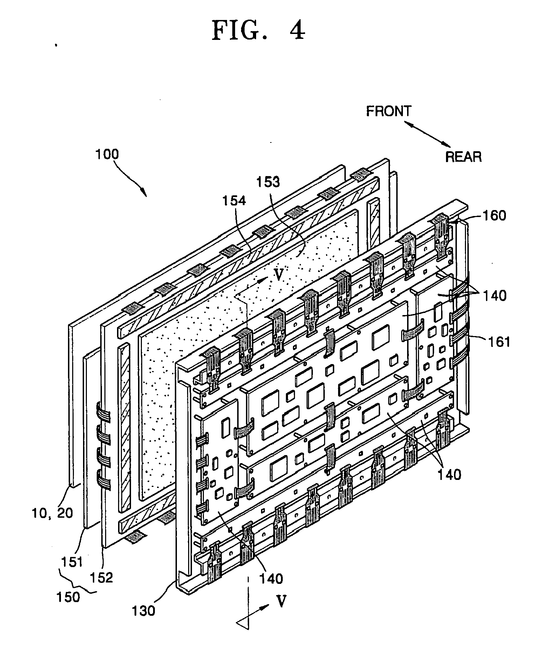

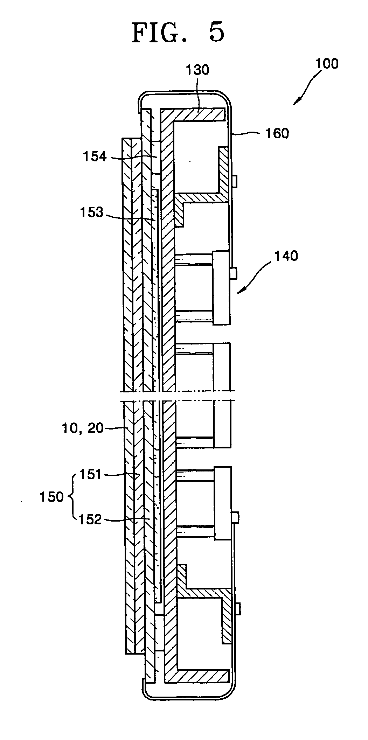

FIG. 4 is a perspective view of a plasma display apparatus 100 including an filter according to an embodiment of the present invention, and FIG. 5 is a cross-sectional view of the display apparatus of FIG. 4, taken along the line V-V. In the current embodiment, the filter according to the present invention is used in a plasma display apparatus. However, a display apparatus including a filter according to an embodiment of the present invention is not limited to being a plasma display apparatus.

The plasma display apparatus 100 includes a plasma display panel 150, a chassis 130, and a circuit unit 140. The filter 10 or 20 is attached to a front surface of the plasma display panel 150. The plasma display panel 150 can bond to the chassis 130 through an adhesive, such as a double-side tape 154. A thermally conductive member 153 may be interposed between the chassis 130 and the plasma display panel 150 to dissipate heat which is generated when the plasma display panel 150 operates through the chassis 130.

The plasma display panel 150 displays an image through gas discharge, and includes a front panel 151 and a rear panel 152 combined together.

The filter 10 or 20 can be bound to the front surface of the plasma display panel 150 by an adhesive layer (not shown.)

The filter 10 or 20 allows internal visible light generated in the plasma display panel 150 to propagate in a forward direction from the plasma display apparatus 100 and reflects or blocks external light, so that the bright room contrast of the plasma display panel 150 improves. In addition, substantially direct bonding of the filter 10 to the front surface of the plasma display panel 150 prevents the occurrence of double images.

Compared to a conventional tempered glass filter, the filter 10 or 20 is more lightweight and its manufacturing costs and physical distribution costs are reduced.

The chassis 130 is disposed at a rear side of the plasma display panel 150 to structurally support the plasma display panel 150. The chassis 130 may be formed of a metal having excellent rigidity, such as aluminum or iron, or plastic.

A thermally conductive member 153 is interposed between the plasma display panel 150 and the chassis 130. The thermally conductive member 153 is surrounded by a plurality of pieces of double-sided tape 154 which fix the plasma display panel 150 and the chassis 130 together.

A circuit unit 140 is disposed on a rear side of the chassis 130, and circuits which operate the plasma display panel 150 are arranged on the circuit unit 140. The circuit unit 140 carries an electrical signal to the plasma display panel 150 by signal carrying means. The signal carrying means can be flexible printed cable (FPC), tape carrier package (TCP), chip on film (COF), or the like. In the current embodiment, FPCs 161 used as signal carrying means are disposed at left and right sides of the chassis 130, and TCPs 160 used as signal carrying means are disposed at upper and lower sides of the chassis 130.

Although the above described apparatus including a filter according to the present invention is a plasma display apparatus, the filter can be attached to front surfaces of various other types of display apparatus.

In a filter according to the present invention and a plasma display apparatus including the same, formation of double images can be prevented because the filter is directly bound to a front surface of a display panel. In addition, the weight of the filter is decreased because the thickness of a base film used in the film is relatively thin. In addition, use of the filter contributes to improved bright room contrast.

While the present invention has been particularly shown and described with reference to certain embodiments thereof, it will be understood by those of ordinary skill in the art that various changes in form and details may be made therein without departing from the scope of the present invention as defined by the following claims.

## Claims

1. A filter comprising:
a base film; and
a plurality of first color patterns extending in a predetermined direction and disposed at predetermined intervals in a stripe form on a surface of the base film.

2. A filter according to claim 1, wherein *w* ≤ *d* ≤ 95*w*, where *w* denotes the cross sectional width of each of the first color patterns and *d* denotes of the interval between the first color patterns.

3. A filter according to claim 1 or claim 2, wherein the cross sectional width of each of the first color patterns is in the range of 5 µm to 50 µm.

4. A filter according to any preceding claim, wherein the thickness of each of the first color patterns is in the range of 1 µm to 200 µm.

5. A filter according to any preceding claim, wherein, a ratio of the thickness of the first color patterns to their width is in the range of 0.025 to 50.

6. A filter according to any preceding claim, further comprising an adhesive layer disposed on a rear surface of the base film.

7. A filter according to any preceding claim, further comprising a plurality of second color patterns extending in predetermined a direction and disposed at predetermined intervals in a stripe form on an opposite surface of the base film to the surface on which the first color patterns are disposed.

8. A filter according to claim 7, wherein the second color patterns are disposed in substantially corresponding locations to the first color patterns.

9. A filter according to claim 8, wherein the misalignment of the first color patterns and the second color patterns is in the range of 0% to 20 %, wherein 0% misalignment indicates exact overlapping of the first color pattern and the second color pattern.

10. A filter according to claim 7, 8 or 9 wherein w ≤ d ≤ 95*w* where *w* denotes the cross sectional width of each of the first color patterns and the second color patterns and d denotes the interval between each of the first color patterns and the interval between second color patterns.

11. A filter according to one of claims 7 to 10, wherein the cross sectional width of each of the first and second color patterns is in the range of 5 µm to 60 µm.

12. A filter according to one of claims 7 to 11, wherein the thickness of each of the first and second color patterns is in the range of 1 µm to 200 µm.

13. A filter according to one of claims 7 to 12, wherein the ratio of the thickness to the width of the first and second colour patterns is in the range of 0.025 to 60.

14. A filter according to one of claims 7 to 13, further comprising an adhesive layer which fills intervals between a rear surface of the base film and the second color patterns.

15. A filter according to any preceding claim, wherein the base film comprises dyes or pigment to adjust color and transmissivity.

16. A display apparatus comprising:
a display panel which displays an image;
an operation circuit substrate which controls the display panel by supplying an operation signal and electrical power to the display panel;
a chassis supporting the display panel and the operation circuit substrate; and
a filter according to any one of claims 1 to 15, wherein the filter is bonded to a front surface of the display panel.

17. A display apparatus according to claim 16, wherein the display apparatus is a plasma display panel which displays images through gas discharge.
